# EUROPÄISCHE PATENTSCHRIFT

(11) **EP 4 381 359 B1**
(45) Veröffentlichungstag und Bekanntmachung des Hinweises auf die Patenterteilung: **15.10.2025**
(21) Anmeldenummer: 22738332.0
(22) Anmeldetag: 13.06.2022
(51) Int. Cl.: G05B 23/02, G05B 19/418

(54) **INDUSTRIEANLAGE UND VERFAHREN ZUM ANLAGENBETRIEB UND -MONITORING**
INDUSTRIAL PLANT AND METHOD OF PLANT OPERATION AND MONITORING
INSTALLATION INDUSTRIELLE ET PROCÉDÉS D'EXPLOITATION ET DE SURVEILLANCE DE L'INSTALLATION

(30) Priorität: 03.08.2021 DE 102021120081; 09.06.2022 DE 102022114579
(43) Veröffentlichungstag der Anmeldung: 12.06.2024
(73) Patentinhaber: Schaeffler Technologies AG & Co. KG, 91074 Herzogenaurach (DE)
(72) Erfinder: BRAND, Stefan, 91074 Herzogenaurach (DE)
(74) Vertreter: Rauscher-Thies, Elke Doris
(86) Internationale Anmeldenummer: PCT/DE2022/100438
(87) Internationale Veröffentlichungsnummer: WO 2023/011679

(56) Entgegenhaltungen:
- US-A1- 2020 401 109
- GALLACHÓIR BRIAN Ó ET AL: "ECEEE 2009 SUMMER STUDY @BULLET ACT! INNOVATE! DELIVER! REDUCING ENERGY DEMAND SUSTAINABLY Modelling energy consumption in a manufacturing plant using productivity KPIs", 31 December 2009 (2009-12-31), pages 1155 - 1161, XP055955828, Retrieved from the Internet <URL:https://www.eceee.org/static/media/uploads/site-2/library/conference_proceedings/eceee_Summer_Studies/2009/Panel_5/5.153/paper.pdf> [retrieved on 20220829]
- GALLACHÓIR BRIAN Ó ET AL: "ECEEE 2009 SUMMER STUDY @BULLET ACT! INNOVATE! DELIVER! REDUCING ENERGY DEMAND SUSTAINABLY Modelling energy consumption in a manufacturing plant using productivity KPIs", 31 December 2009 (2009-12-31), pages 1155 - 1161, XP55955828, Retrieved from the Internet <URL:https://www.eceee.org/static/media/uploads/site-2/library/conference_proceedings/eceee_Summer_Studies/2009/Panel_5/5.153/paper.pdf> [retrieved on 20220829]
- GALLACHÓIR BRIAN Ó ET AL: "ECEEE 2009 SUMMER STUDY @BULLET ACT! INNOVATE! DELIVER! REDUCING ENERGY DEMAND SUSTAINABLY Modelling energy consumption in a manufacturing plant using productivity KPIs", 31 December 2009 (2009-12-31), pages 1155 - 1161, XP055955828, Retrieved from the Internet <URL:https://www.eceee.org/static/media/uploads/site-2/library/conference_proceedings/eceee_Summer_Studies/2009/Panel_5/5.153/paper.pdf> [retrieved on 20220829]

## Beschreibung

Die Erfindung betrifft eine mehrere Produktionsmaschinen umfassende Industrieanlage sowie ein Verfahren zum Anlagenbetrieb und -monitoring.

Die US 2020/401109 A1 befasst sich mit der Bearbeitung von Informationen im Zusammenhang mit einer industriellen Anlage, die mehrere Einzelanlagen umfasst. Hierbei werden zahlreiche Kennzahlen gewonnen, die sich zum Teil auch auf nicht produzierende Einrichtungen, zum Beispiel eine Klimaanlage, beziehen. Insbesondere wird im Rahmen des in der US 2020/401109 A1 beschriebenen Verfahrens der Energieverbrauch von Anlagen ausgewertet.

Mit der Modellierung des Energieverbrauchs von Industrieanlagen befasst sich folgender Artikel:
Gallachóir, Brian Ö et al.: Modelling energy consumption in a manufacturing plant using productivity KPIs, ECEEE 2009 Summer Study Act! Innovate! Deliver! Reducing energy demand sustainably, 31. Dezember 2009, Seiten 1155 - 1161
Insbesondere wird in diesem Artikel auf sogenannte Key Performance Indicators (KPIs) eingegangen.

Die EP 3 055 976 B1 offenbart Verfahren und Systeme für eine universelle drahtlose Plattform zur Anlagenüberwachung. Das System ist computerimplementiert und umfasst eine Vielzahl von messtechnischen Abtastvorrichtungen sowie eine Vielzahl von messtechnischen Schnittstellenvorrichtungen. Ferner sind mobile Datenverarbeitungsvorrichtungen dem aus der EP 3 055 976 B1 bekannten System zuzurechnen.

Die EP 3 644 153 A1 offenbart ein System zur aktiven Anlagenüberwachung, welches dazu ausgebildet ist, an einer Anlage oder einer Mehrzahl an Anlagen Spannungsmessungen durchzuführen. Das System soll als lernendes System ausgebildet sein.

Aus der CN 111950767 A ist ein Analysesystem bekannt, welches Energieeffizienz zum Gegenstand hat und auf eine Datenbank zugreift. Das Analysesystem verarbeitet unter anderem Betriebs- und Wartungsdaten. Hierbei ist eine Datenerfassung in Echtzeit vorgesehen. Das Ergebnis der Energieeffizienzanalyse kann auf einem Display angezeigt werden und soll als Entscheidungsgrundlage für das Betriebs- und Wartungspersonal herangezogen werden können.

Die DE 10 2013 111 497 A1 offenbart eine Bekleidungsbehandlungsvorrichtung, die die Energieeffizienz angibt und damit den Anwender in die Lage versetzen soll, die Energieeffizienz in Echtzeit zu prüfen. Die in der DE 10 2013 111 497 A1 beschriebene Bekleidungsbehandlungsvorrichtung umfasst unter anderem eine Wärmepumpe einschließlich eines Kompressors, eines Kondensators und eines Verdampfers. Eine Steuereinheit soll in der Lage sein, die Energieeffizienz auf Basis des Wertes eines physikalischen Parameters eines zirkulierenden Heizmediums zu berechnen.

Die EP 1 886 199 B1 beschreibt ein Betriebsverfahren für eine Auswertungseinrichtung für eine Produktionsmaschine, insbesondere eine Werkzeugmaschine. Im Rahmen dieses Betriebsverfahrens werden während der Herstellung eines Produktes von Sensoren Istzustände der Produktionsmaschine erfasst. Anschließend werden die erfassten Zustände mit vordefinierten Zustandskombinationen verglichen, womit erfüllte Zustandskombinationen ermittelt werden sollen. Hieran können sich weitere Auswertungen anschließen. Eine Rolle spielen hierbei insbesondere die Erfassungszeitpunkte der Zustände. Letztlich wird insbesondere auf die Gewinnung statistischer Informationen über die Produktionsmaschine abgezielt.

In der DE 10 2012 206 082 A1 wird ein Verfahren zur Beurteilung eines Zustands einer Anlage und zur Einleitung von Maßnahmen vorgeschlagen. Im Rahmen dieses Verfahrens werden Energie- und/oder Mediendaten über einen Referenzzeitraum vordefinierter Dauer aufgenommen, um Referenzwerte zu bestimmen. In einem späteren Schritt des Verfahrens werden Daten über einen Vergleichszeitraum aufgenommen, dessen Dauer der Dauer des Referenzzeitraums entsprechen kann. Weichen im Vergleichszeitraum aufgenommene Werte zu stark von den zugehörigen Werten des Referenzzeitraums ab, so können vordefinierte Maßnahmen eingeleitet werden.

Die DE 10 2014 006 321 A1 und DE 10 2014 006 322 A1 haben Verfahren zur Analyse der Energieeffizienz eines Kraftfahrzeugs zum Gegenstand. In beiden Fällen werden Sensoren zur Erfassung von Zuständen beim Betrieb des Fahrzeugs verwendet. Die von den Sensoren erfassten Daten fließen in verschiedene Datensätze ein.

Der Erfindung liegt die Aufgabe zugrunde, gegenüber dem Stand der Technik weiterentwickelte Möglichkeiten des Anlagenbetriebs und -monitorings im industriellen Bereich anzugeben, wobei ein besonderer Schwerpunkt auf den Energie- und Medienverbrauch sowie auf die Emission klimarelevanter Gase gelegt werden soll.

Diese Aufgabe wird erfindungsgemäß gelöst durch ein Verfahren zum Anlagenbetrieb und -monitoring gemäß Anspruch 1. Das Betriebs- und Monitoringverfahren bezieht sich auf eine Produktionsmaschine. Ebenso wird die Aufgabe gelöst durch eine mehrere Produktionsmaschinen umfassende Industrieanlage mit den Merkmalen des Anspruchs 6. Im Folgenden im Zusammenhang mit den Vorrichtungen, das heißt einer einzelnen Produktionsmaschine oder einer kompletten Industrieanlage, erläuterte Ausgestaltungen und Vorteile der Erfindung gelten sinngemäß auch für das Betriebs- und Monitoringverfahren, und umgekehrt.

Das Betriebs- und Monitoringverfahren geht davon aus, dass einer Produktionsmaschine zunächst zwei Kennzahlen zugeordnet sind, welche bereits vor Aufnahme des betrachteten, bestimmungsgemäßen Betriebs, das heißt Produktionsbetriebs, gewonnen wurden. Bei diesen Kennzahlen handelt es sich zum einen um einen Energienutzungsgrad und zum anderen um einen Energieleistungsgrad. Nachdem diese Kennzahlen vorliegen, wird im bestimmungsgemäßen Betrieb eine dritte Kennzahl, bei welcher es sich um eine Energiequalitätsrate handelt, wiederkehrend ermittelt. Zumindest eine der drei genannten Kennzahlen hat einen direkten und/oder indirekten Bezug zur Emission klimarelevanter Gase, insbesondere zur Emission von Kohlendioxid.

Die wiederkehrende Ermittlung kann bedeuten, dass die entsprechende Kennzahl in diskreten Zeitabständen gewonnen wird. Ebenso ist eine kontinuierliche Aufnahme der Kennzahl möglich. In beiden Fällen wird aus allen drei Kennzahlen ein Energie-Index generiert. Dieser Energie-Index wird wiederkehrend mit einem Grenzwert verglichen, wobei bei Überschreitung des Grenzwertes ein den Betrieb der Produktionsmaschine betreffendes Signal ausgelöst wird. Dieses Signal wird automatisch aus einer Gruppe an Signalen ausgewählt, die mindestens ein Warnsignal sowie ein Abschaltsignal umfasst. Durch das Abschaltsignal wird je nach Anlagenkonfiguration entweder eine einzige Produktionsmaschine, eine Gruppe an Produktionsmaschinen oder die gesamte Anlage, das heißt sämtliche Produktionsmaschinen, abgeschaltet.

Das anmeldungsgemäße Betriebs- und Monitoringverfahren ist insbesondere für die Integration in ein Energiemanagementsystem im Sinne der DIN EN ISO 50001 (Dez. 2018) geeignet und generell bei beliebigen produzierenden Maschinen oder Anlagen anwendbar. Das Verfahren ist insbesondere in Fällen anwendbar, in denen eine Unterscheidbarkeit zwischen einem produktiven Betrieb und einem verallgemeinernd als Ruhebetrieb bezeichneten nicht produktiven Betrieb der Maschine beziehungsweise Anlage gegeben ist. Hierbei wird davon ausgegangen, dass prinzipielle Möglichkeiten der Beeinflussung des Energieverbrauchs im produktiven Betrieb und/oder im Ruhebetrieb gegeben sind. Durch den produktiven Betrieb ist ein sogenannter Berichtszeitraum im Sinne der DIN EN ISO 50001 (Ziff. A.6.4) gegeben. Gegenüber den in der DIN EN ISO 50001 dargelegten Grundzügen des Energiemanagements stellt das anmeldungsgemäße Betriebs- und Monitoringverfahren eine verfeinerte Methode der Steigerung der energetischen Effizienz in einer Einrichtung des produzierenden Gewerbes dar. Insbesondere liefert das Betriebs- und Monitoringverfahren Steuergrößen zur Verbesserung der wertschöpfenden Energieverbräuche.

Der Energienutzungsgrad weist als erste Kennzahl eine Abhängigkeit vom Verhältnis zwischen der im Produktionsbetrieb und der im Ruhebetrieb aufgenommenen Leistung auf. Hierbei wird davon ausgegangen, dass die Leistung ebenso wie der Medienverbrauch im Ruhebetrieb in der Regel nicht auf Null abgesenkt wird. Typischerweise wird die Leistung in kWh angegeben. Dies ist jedoch nicht Voraussetzung für die Durchführung des Betriebs- und Monitoringverfahrens. Werden beispielsweise verschiedene Formen von Stoffen sowie Leistung und damit auch Energie, etwa elektrische Leistung sowie chemische gebundene Energie, zum Betrieb der Maschine oder Anlage benötigt, so werden die Leistungen beziehungsweise sonstigen Größen nicht notwendigerweise einfach addiert. Vielmehr können die verschiedenen Energieströme und sonstigen Ströme mit Gewichtungsfaktoren beaufschlagt werden, welche den unterschiedlichen ökologischen Auswirkungen der verschiedenen Energie- oder Medienströme Rechnung tragen. Als Resultat, welches pauschal als Leistung bezeichnet wird, kann in einem solchen Fall insbesondere eine dimensionslose Kennzahl stehen.

Der Energieleistungsgrad als zweite Kennzahl ist vom Wirkungsgrad im Produktionsbetrieb abhängig, wobei der Begriff "Wirkungsgrad" nicht streng physikalisch, sondern in einem weiteren Sinne zu verstehen ist. In jedem Fall ist der Energieleistungsgrad von der Gleichmäßigkeit des Energieverbrauchs im Produktionsbetrieb der betreffenden Maschine oder Anlage abhängig. Auch in diesem Fall kann die Kennzahl, ebenso wie die erste Kennzahl, dimensionslos sein. In die Ermittlung des Energieleistungsgrades können auch Vergleiche mit mindestens einer anderen, mit der betrachteten Produktionsmaschine prinzipiell vergleichbaren Maschine, das heißt Referenzmaschine, eingehen.

In die Energiequalitätsrate, welche die dritte Kennzahl darstellt, geht ein Vergleich zwischen dem Energieverbrauch bei der Produktion eines Referenzteiles und dem aktuellen Energieverbrauch im bestimmungsgemäßen Betrieb, das heißt im Berichtszeitraum, ein. Das Referenzteil kann hierbei mit derselben Maschine oder Anlage produziert worden sein, mit der auch der bestimmungsgemäße Betrieb durchgeführt wird. Die Energiequalitätsrate ist insofern auf einen Testbetrieb oder einen vergangenen regulären Betrieb gestützt, in welchem Referenzteile produziert wurden. Alternativ kann die Energiequalitätsrate durch Simulation gewonnen werden.

Auch ein kombiniertes Einfließen simulierter sowie gemessener Daten in die Energiequalitätsrate ist möglich. In allen Fällen ist die Energiequalitätsrate insbesondere nutzbar, um Veränderungen, besonders Verschlechterungen, während des laufenden Betriebs zeitnah - im Idealfall in Echtzeit - zu detektieren. Solche Veränderungen können im Einzelfall beispielsweise auf Leckagen oder die Verschlechterung von Komponenten zurückzuführen sein. Im Vergleich zu den ersten beiden Kennzahlen, das heißt dem Energienutzungsgrad und dem Energieleistungsgrad, kann die Energiequalitätsrate in typischen Anwendungsfällen wesentlich stärker fluktuieren.

Im Vergleich zur Energiequalitätsrate können die ersten beiden Kennzahlen daher während einer zu betrachtenden Phase des bestimmungsgemäßen, produzierenden Betriebs typischerweise näherungsweise als Konstanten betrachtet werden. Somit ergibt sich der Energie-Index in vereinfachter Betrachtung zu jedem Zeitpunkt des bestimmungsgemäßen Betriebs zumindest in grober Näherung als Summe aus zwei in der entsprechenden Betriebsphase gleichbleibenden Kennzahlen und einer dritten, möglicherweise signifikanten Änderungen unterworfenen Kennzahl, nämlich der Energiequalitätsrate. Auch die Energiequalitätsrate kann mit einem von Eins abweichenden Faktor, das heißt einem Gewichtungsfaktor, in den Energie-Index, welcher eine resultierende Kennzahl darstellt, eingehen.

Der Energie-Index wird insbesondere herangezogen, um von Betriebsphase zu Betriebsphase kontinuierliche, planbare und messbare Verbesserungen der Maschine oder Anlage hinsichtlich ihrer Energieeffizienz zu erzielen. Diese Verbesserung können sich insbesondere bereits in den beiden ersten Kennzahlen, das heißt dem Energienutzungsgrad und dem Energieleistungsgrad, niederschlagen. Verbesserungen sind zum Beispiel erzielbar, indem Paramater des Ruhebetriebs, welcher als Standby-Betrieb gestaltet sein kann, verändert eingestellt werden. Die Veränderungen können hierbei unter anderem den Verbrauch elektrischer Energie, Medienverbräuche und/oder den Verbrauch an Druckluft betreffen, wobei in Einzelfällen auch das Druckniveau eine Rolle spielen kann. Analoges gilt in Fällen, in denen die Maschine oder Anlage an Vakuum anzuschließen ist, das heißt ein definierter Unterdruck aufrecht zu erhalten ist.

Allgemein gilt der Zusammenhang, dass ein Erreichen des den Energie-Index betreffenden Grenzwertes während des produktiven Betriebs umso unwahrscheinlicher ist, je weiter die ersten beiden, in erster Näherung als konstant angenommenen Kennzahlen vom kritischen Bereich entfernt sind. Von daher ist ein starker Anreiz gegeben, bereits in der Planungsphase gerade die ersten beiden Kennzahlen zu optimieren. In jedem Fall wird die Optimierung mit Hilfe der wiederkehrenden Ermittlung der dritten Kennzahl, das heißt der Energiequalitätsrate, im Zuge des Betriebes der Maschine oder Anlage systematisiert und verstetigt. In die Energiequalitätsrate gehen Werte ein, welche mit Hilfe von Sensorik an der Maschine oder Anlage gewonnen wurden. Die Sensorik ist insbesondere zur Erfassung elektrischer Größen ausgebildet. Auch Zählvorrichtungen, die beispielsweise die Anzahl fertiggestellter Werkstücke ausgeben, sind in diesem Sinne unter den Begriff "Sensorik" zu subsummieren. Darüber hinaus kann die Eingabe von Werten durch das Bedienpersonal vorgesehen sein.

Unabhängig von der Art der Datenerfassung können vorgenommene Vergleiche zwischen dem Energie-Index und dem zugehörigen Grenzwert in ein Analyseprogramm zur Optimierung des produktiven und/oder nicht produktiven Betriebs der Produktionsmaschine oder der gesamten Industrieanlage eingehen. Neben der energetischen Optimierung können durch das Analyseprogramm unter anderem Hinweise zur vorbeugenden Instandhaltung gewonnen werden.

Gemäß verschiedener möglicher Ausgestaltungen existieren sechs oder mehr mögliche Stufen des Energie-Index. Hierbei repräsentiert ein niedriger Index typischerweise eine schlechte Einstufung und ein hoher Index eine gute Einstufung. Die einzelnen Stufen können durch Farbtöne kenntlich gemacht werden. Besonders gute Einstufungen, durch welche die bislang höchste Stufe übertroffen wird, können beispielsweise durch einfache oder mehrfache Pluszeichen kenntlich gemacht werden. Bei dem Grenzwert, mit welchem der ermittelte Energie-Index zu vergleichen ist, handelt es sich im einfachsten Fall um einen konstanten Wert. Ebenso sind zeitliche Änderungen, insbesondere Absenkungen, des Grenzwertes möglich.

Verschiedene weiterentwickelte Varianten des Verfahrens sehen vor, dass im Zuge der Generierung des Energie-Index mindestens ein abgeleiteter Energie-Index ermittelt wird, welcher aus einer Gruppe an Indizes ausgewählt ist, die einen über eine Zeiteinheit gemittelten analysierten Energie-Index, einen eine dauerhafte Klassifizierung angebenden klassifizierten Energie-Index, sowie einen als Echtzeit-Einstufung fungierenden Live Energie-Index umfasst, wobei im letztgenannten Fall nicht notwendigerweise harte Echtzeitanforderungen zu erfüllen sind.

Der analysierte Energie-Index wird beispielsweise über eine Woche oder einen Monat als Zeiteinheit berechnet und liefert dementsprechend Wochenmittel beziehungsweise Monatsmittel. Im Rahmen der Berechnung des analysierten Energie-Index ist auch eine automatische Anpassung des Energieverbrauchs an eine Produktionsaufgabe möglich. Berücksichtigt werden kann unter anderem ein reduzierter Energieverbrauch in Zeiten, in denen eine Maschine nicht produktiv arbeitet. Insbesondere kann der analysierte Energie-Index genutzt werden, um automatisch einen Auftrag an die Instandhaltung zu erteilen, wenn der tatsächliche Energieverbrauch einen vorgegebenen Normalbereich verlässt.

Der klassifizierte Energie-Index ist insbesondere zur Vergabe einer dauerhaften Klassifizierung geeignet und als statistischer Wert aufzufassen. Entsprechend dem vergebenen klassifizierten Energie-Index kann eine Maschine dauerhaft gekennzeichnet werden. Als Kennzeichnungen sind beispielsweise Aufkleber, Siegel, Plaketten oder speziell gestaltete Mensch-Maschine-Schnittstellen denkbar. Auch die Aufnahme des klassifizierten Energie-Index in die Bedienungsanleitung einer Maschine, beispielsweise einer Maschine zur spanenden oder umformenden Bearbeitung metallischer oder nichtmetallischer Werkstücke, kommt in Betracht.

Der Live Energie-Index stellt das Gegenstück zum klassifizierten Energie-Index dar. Wie die Bezeichnung Live Energie-Index bereits andeutet, werden durch diesen Index Livewerte, die sich auf den augenblicklichen Zustand einer Maschine beziehen, wiedergegeben. Auch zur Wiedergabe des Live Energie-Index sind gängige Anzeigevorrichtungen an der betreffenden Maschine oder an beliebiger anderer Stelle geeignet.

Unabhängig davon, in welcher Anzahl und in welcher Detaillierung Indizes, die sich auf den Energieverbrauch und zumindest teilweise auch auf die Emission klimarelevanter Gase beziehen, generiert werden, können in die Ermittlung des mindestens einen Index auch Prozesse eingehen, die dem zu betrachtenden Produktionsprozess, das heißt dem Prozess im engeren Sinne, vor- oder nachgelagert sind.

Als vorgelagerte Prozesse, die in irgendeiner Form mit Energieverbrauch und Emissionen verknüpft sind, können im Einzelfall zum Beispiel Fahrten von Beschäftigten sowie vorgelagerte Transporte eine Rolle spielen. Auch mit vom Betreiber der Produktionsmaschine gekauften Vorprodukten und Dienstleitungen sind in der Regel vorgelagerte Verbräuche und Emissionen verbunden. Werden vom Betreiber der Produktionsmaschine mobile oder stationäre Güter geleast, wobei auch ein lediglich indirekter Zusammenhang mit der Produktion gegeben sein kann, so finden auch diese Vorgänge Eingang in Berechnung von Verbräuchen und klimarelevanten Emissionen durch vorgelagerte Prozesse. Für die Gesamtheit der vorgelagerten Prozesse wird auch der Begriff vorgelagerte Wertschöpfungskette verwendet.

Was nachgelagerte Prozesse betrifft, die ebenfalls in die Berechnung der Energie-Indizes einfließen, sind beispielhaft Emissionen zu nennen, die bei Kunden oder Franchise-Nehmern des Produktionsbetriebs anfallen. Auch durch den Transport sowie die Entsorgung produzierter Waren entstehen nachgelagerte Emissionen und Verbräuche. Insgesamt werden die nachgelagerten Prozesse einer nachgelagerten Wertschöpfungskette zugerechnet.

Generell ist es möglich, als Grenzwerte und als Energie-Indizes entweder dimensionslose oder dimensionsbehaftete Werte zu verwenden. Im letztgenannten Fall kann als Einheit insbesondere kWh gewählt werden, wobei zu diesem Zweck verschiedene Energieformen oder auch Medienströme umzurechnen sind. Dies kann bedeuten, dass die kWh-Angaben nicht notwendigerweise als Angaben in einer exakt definierten physikalischen Einheit zu verstehen sind. Der Energie-Index kann in solchen Fällen als Quotient aus einer Summe an Verbräuchen (in kWh) und einer produzierten Stückzahl, das heißt einem Durchsatz der Maschine oder Anlage, aufgefasst werden. Durch die Festlegung einzelner Stufen, beispielsweise 4, 10, 13, 17 und 20 kWh, können verschiedene Energieeffizienzklassen definiert werden, wobei die Unterschreitung der ersten Stufe die beste Energieeffizienzklasse und die Überschreitung der höchsten Stufe die schlechteste der in diesem Fall sechs Energieeffizienzklassen bedeutet.

Eine anmeldungsgemäße Industrieanlage umfasst eine Mehrzahl an Produktionsmaschinen, welche in Zusammenwirkung mit einer Datenverarbeitungsanlage zur Durchführung des Verfahrens nach Anspruch 1 eingerichtet sind. Die Industrieanlage ist typischerweise der metallverarbeitenden Industrie zuzurechnen. Grundsätzliche Einschränkungen hinsichtlich der Art der hergestellten Produkte existieren nicht.

Beispielsweise sind mindestens vier miteinander verkettete Produktionsmaschinen vorhanden, wobei die zentral oder dezentral realisierte Datenverarbeitungsanlage zur Generierung des gesamten Energie-Index der sämtliche Produktionsmaschinen umfassenden Industrieanlage eingerichtet ist. Die Datenverarbeitungsanlage kann räumlich ganz oder teilweise in eine der Produktionsmaschinen integriert sein. Ebenso ist es möglich, die Datenverarbeitungsanlage in Form einer einzigen Maschine oder einer Mehrzahl verteilter Komponenten außerhalb der Produktionsmaschine anzuordnen.

Berichtszeiträume, über die ein Energie-Index einer einzelnen Maschine und/oder einer Industrieanlage fortlaufend ermittelt wird und Eingang in die Datenauswertung findet, erstrecken sich beispielsweise über einen Tag bis hin zu einigen Monaten. Der ermittelte Energie-Index kann an der Maschine oder Anlage auf beliebige Weise, etwa durch ein Typenschild oder auf einem Monitor, angezeigt werden. Bereits bei der Konzeption einer komplexen Anlage können Anforderungen an die, von den einzelnen Maschinen der Anlage zu erfüllenden Energieeffizienzklassen definiert werden. Die Einhaltung dieser Mindestanforderungen kann dann im laufenden Betrieb durch das beschriebene Betriebs- und Monitoringverfahren überwacht werden.

Nachfolgend wird ein Ausführungsbeispiel der Erfindung anhand einer Zeichnung näher erläutert. Hierin zeigen:
- Fig. 1: in einem an ein Flussdiagramm angelehnten Schaubild ein Verfahren zum Anlagenbetrieb und -monitoring,
- Fig. 2: in symbolisierter Darstellung eine aus mehreren miteinander verketteten Produktionsmaschinen aufgebaute Industrieanlage, welche zur Durchführung des Verfahrens nach Figur 1 ausgebildet ist,
- Fig. 3: weitere Merkmale des Verfahrens zum Anlagenbetrieb und -monitoring einschließlich eines Vergleiches verschiedener Produktionsprozesse.

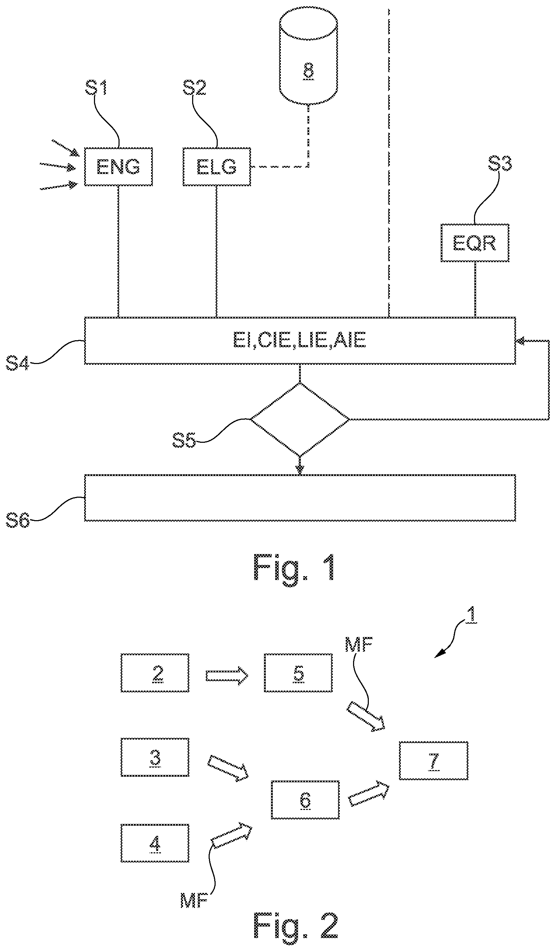

Eine insgesamt mit dem Bezugszeichen 1 gekennzeichnete Produktionsanlage, in welcher das anmeldungsgemäße, in Figur 1 veranschaulichte Betriebs- und Monitoringverfahren implementiert ist, umfasst eine Mehrzahl miteinander verketteter Produktionsmaschinen 2, 3, 4, 5, 6, 7. In der in Figur 2 skizzierten Konstellation stellen die Maschinen 2, 3, 4 Maschinen zur Verarbeitung eines Vorproduktes, die Maschinen 5, 6 Maschinen zur Bearbeitung eines Zwischenproduktes und die Maschine 7 eine Maschine zur Herstellung eines Endproduktes dar. Ein Materialfluss durch die Produktionsanlage 1 ist mit MF bezeichnet.

Eine Datenverarbeitungsanlage 8 ist mit sämtlichen Produktionsmaschinen 2, 3, 4, 5, 6, 7 verknüpft. Das anmeldungsgemäße Betriebs- und Monitoringverfahren ist Teil eines Energiemanagementsystems nach DIN EN ISO 50001, Fassung Dezember 2018.

Dementsprechend leistet das Betriebs- und Monitoringverfahren einen Beitrag zur fortlaufenden Verbesserung der energiebezogenen Leistung der Produktionsanlage 1. Im vorliegenden Fall werden durch die Produktionsanlage 1 vorwiegend metallische Werkstücke bearbeitet. Dies schließt die spanende Bearbeitung von Werkstücken ein. Ebenso werden in der Produktionsanlage 1 Montageschritte durchgeführt. Der Automatisierungsgrad der einzelnen Produktionsmaschinen 2, 3, 4, 5, 6, 7 kann sich gravierend voneinander unterscheiden und von Handarbeitsplätzen bis zu vollautomatisierten Maschinen reichen. Insgesamt werden in der Produktionsanlage 1 verschiedene Arten von Energie und Medien verbraucht, wobei beispielhaft Strom, Gas, Wasser, Druckluft und Kühlschmiermittel zu nennen ist. Ebenso ist der Betrieb der Produktionsanlage 1 mit Emissionen EM verbunden. Hierunter fallen unter anderem direkte sowie indirekte Emissionen klimarelevanter Gase, insbesondere CO₂-Emissionen.

Zu den Stoffen, die beim Betrieb der Produktionsanlage 1 emittiert werden, zählen neben gasförmigen Emissionen EM, insbesondere in Form von Kohlendioxid, auch Emissionen in sonstigen Aggregatzuständen, insbesondere in Form von Abwasser. In allen Fällen kann es sich um direkte oder indirekte Emissionen handeln. Verbräuche und Emissionen EM werden sowohl den einzelnen Produktionsmaschinen 2, 3, 4, 5, 6, 7 als auch der Produktionsanlage 1 als Ganzes zugeordnet. Dies gilt bereits bei der Planung der Produktionsanlage 1 und erst recht während des bestimmungsgemäßen Betriebs der Produktionsanlage 1. Für den bestimmungsgemäßen Betrieb wird in der DIN EN ISO 50001 der Begriff Berichtszeitraum verwendet. Im bestimmungsgemäßen Betrieb ist der Materialfluss MF auf die Herstellung qualitativ einwandfreier, verkaufsfähiger Endprodukte ausgerichtet. Insbesondere ist der bestimmungsgemäße Betrieb von einem Probebetrieb der Produktionsanlage 1 zu unterscheiden.

Noch vor Aufnahme des bestimmungsgemäßen Betriebes, das heißt vor Beginn des Berichtszeitraums, wird in einem ersten Verfahrensschritt S1 ein Energienutzungsgrad ENG ermittelt, der als erste Kennzahl definiert ist und das Verhältnis zwischen Produktionsbetrieb und Ruhebetrieb der Produktionsanlage 1 beschreibt. Typischerweise wird eine aufgenommene Leistung der Produktionsanlage 1, aber auch jeder einzelnen Produktionsmaschine 2, 3, 4, 5, 6 ,7 sowohl im Produktionsbetrieb als auch im Ruhebetrieb in kWh angegeben. Im vorliegenden Fall wird davon ausgegangen, dass die Produktionsanlage 1 dazu in der Lage ist, unterschiedliche Produkte zu fertigen.

Im Rahmen verschiedener Probebetriebsphasen gehen somit unterschiedliche Daten in die Ermittlung des Energienutzungsgrades ENG ein, wie in Figur 1 durch mehrere Pfeile veranschaulicht. Die entsprechenden Datenströme sind in nicht dargestellter Weise mit der Datenverarbeitungsanlage 8 verknüpft. Die räumliche Anordnung der Datenverarbeitungsanlage 8 hat ebenso wie ein zentraler oder dezentraler Aufbau der Datenverarbeitungsanlage 8 keinen grundsätzlichen Einfluss auf das Betriebs- und Monitoringverfahren nach Figur 1. Insbesondere kann die Datenverarbeitungsanlage 8 teilweise durch eine Cloud-Lösung realisiert sein. In jedem Fall gehen in die Datenverarbeitungsanlage 8 tatsächlich an den einzelnen Produktionsmaschinen 2, 3, 4, 5, 6, 7 erfasste Informationen ein. In einfachen Fällen handelt es sich hierbei um Verbrauchsinformationen.

In einem zweiten Verfahrensschritt S2, der keinen zwangsläufigen zeitlichen Zusammenhang mit dem ersten Verfahrensschritt S1 hat, wird ein Energieleistungsgrad ELG bestimmt, der allgemein als zweite Kennzahl bezeichnet wird. In den Energieleistungsgrad ELG fließt im weiteren Sinne ein Wirkungsgrad sowie die Gleichmäßigkeit des Energieverbrauchs der Produktionsanlage 1 ein. Entsprechend dem Energienutzungsgrad ENG wird auch der Energieleistungsgrad ELG nicht nur für die gesamte Produktionsanlage 1, sondern auch für jede einzelnen Produktionsmaschine 2, 3, 4, 5, 6, 7 ermittelt. Die Kennzahl 2 ist ebenso wie die Kennzahl 1 dimensionslos. Zur Bestimmung der zweiten Kennzahl wird die Produktionsanlage 1 beziehungsweise die einzelne Produktionsmaschine 2, 3, 4, 5, 6, 7 mit dem Energieniveau einer möglichst baugleichen Referenzanlage beziehungsweise -maschine verglichen. Zu diesem Zweck wird auf Daten zugegriffen, die in der Datenverarbeitungsanlage 8 gespeichert sind und in früheren Zeiträumen gewonnen wurden.

Nach der vorläufigen Festlegung der Kennzahlen ELG und ENG wird in einem dritten Verfahrensschritt S3 eine Energiequalitätsrate EQR als dritte Kennzahl bestimmt. Die Energiequalitätsrate EQR setzt den Energieverbrauch in Relation zur Produktionsmenge und spricht dank eines Analyse- und Auswertesystems, welches durch die Datenverarbeitungsanlage 8 implementiert ist, rasch auf Veränderungen, welche beispielsweise auf Leckagen innerhalb einer Produktionsmaschine 2, 3, 4, 5, 6, 7 zurückzuführen sind, an. Bei der Aufnahme des bestimmungsgemäßen Betriebs wird die Energiequalitätsrate EQR zunächst auf einen Startwert, das heißt Default-Wert, gesetzt. Der Startwert ist insbesondere durch Simulation bestimmbar.

Mit dem Verfahrensschritt S4 beginnt der bestimmungsgemäße Betrieb der Produktionsanlage 1. Dem bestimmungsgemäßen Betrieb wird ein Energieindex EI zugeordnet, welcher entsprechend den einzelnen Kennzahlen ENG, ELG, EQR dimensionslos ist und sich im einfachsten Fall aus einer Addition der drei Kennzahlen ENG, ELG, EQR ergibt. Ebenso können einzelne der Kennzahlen ENG, ELG, EQR mit Gewichtungsfaktoren versehen sein. Darüber hinaus werden im Verfahrensschritt S4 auch die Energieindizes AIE, das heißt ein analysierter Energie-Index, CIE als klassifizierter Energie-Index und LIE als Live Energie-Index, das heißt Energie-Index, der sich ohne technisch relevante Verzögerung auf den aktuellen Zustand der Produktionsmaschinen 2, 3, 4, 5, 6, 7 und damit der gesamten Produktionsanlage 1 bezieht, gewonnen.

Innerhalb des Berichtszeitraums können die ersten beiden Kennzahlen ENG, ELG vereinfacht als Konstanten angesehen werden. Dies gilt jedoch nicht für die dritte Kennzahl EQR. Für die Charakteristik der Anlageüberwachung spielt somit die dritte Kennzahl EQR eine zentrale Rolle. Mit der dritten Kennzahl EQR stellt auch der Energie-Index EI grundsätzlich eine fluktuierende Größe dar. Entsprechendes gilt für die weiterentwickelten, unter Einbeziehung des Energie-Index EI gewonnenen Indizes AIE, CIE und LIE, die zum einen besonders schnelle Reaktionsmöglichkeiten eröffnen (LIE) und zum anderen für mittel- und langfristige Auswertungen (AIE, CIE) herangezogen werden können.

Im Verfahrensschritt S5 wird der Energie-Index EI wiederkehrend mit einem Grenzwert verglichen. Optional gilt dies ebenso für mindestens einen der Indizes AIE, CIE und LIE, insbesondere für den letztgenannten Index LIE, der praktisch einen Echtzeit-Index darstellt. Jedem der Indizes EI, AIE, CIE und LIE ist hierbei, soweit ein Vergleich mit einem Grenzwert vorgesehen ist, ein gesonderter Grenzwert zugeordnet. Liegt der Energie-Index EI sowie gegebenenfalls auch jeder der Indizes AIE, CIE und LIE unterhalb des zugehörigen Grenzwertes, so wird das Verfahren fortgesetzt. Andernfalls werden im Schritt S6 durch die Datenverarbeitungsanlage 8 automatisch Maßnahmen eingeleitet. Im einfachsten Fall kann dies eine Warnmeldung an das Bedienpersonal der Produktionsanlage 1 oder einer einzelnen Produktionsmaschine 2, 3, 4, 5, 6, 7 sein. Ebenso kann ein automatischer Wartungs- oder Reparaturauftrag erteilt werden. Im Extremfall ist der Verfahrensschritt S6 mit Abschaltfunktionen verbunden. Gründe für eine Abschaltung können zum Beispiel eine Gefährdung des Bedienpersonals oder unzulässige Umwelteinwirkungen sein. In jedem Fall werden die gewonnen Daten in die Datenverarbeitungsanlage 8 rückgespeist, um Optimierungen der Produktionsanlage 1 anstoßen zu können.

Die Optimierung, welche mit Hilfe von Algorithmen abläuft, die in der Datenverarbeitungsanlage 8 hinterlegt sind und sich Mitteln der künstlichen Intelligenz bedienen können, bezieht sich insbesondere auf die ersten beiden Kennzahlen ENG, ELG. Unter anderem können Maßnahmen zur Reduzierung von nicht produktiven Zeiten der Produktionsanlage 1 oder einzelner Produktionsmaschinen 2, 3, 4, 5, 6, 7 Ergebnis der Optimierung sein. Denkbare Optimierungsmaßnahmen reichen von kleineren Änderungen an einzelnen Produktionsmaschinen 2, 3, 4, 5, 6, 7 bis zum Austausch kompletter Produktionsmaschinen 2, 3, 4, ,5, 6, 7 oder der Art der Verkettung zwischen den einzelnen Produktionsmaschinen 2, 3, 4, 5, 6, 7. Auch eine Änderung der Anzahl der Produktionsmaschinen 2, 3, 4, 5, 6, 7, welche der Produktionsanlage 1 zuzurechnen sind, ist im Rahmen einer Anlageoptimierung möglich.

Allgemein drückt sich ein Optimierungsprozess dadurch aus, dass insbesondere die Kennzahlen ENG, ELG in Richtung des optimalen Bereichs verschoben werden, sodass damit auch die Distanz des Energie-Index EI vom zugehörigen Grenzwert im bestimmungsgemäßen Betrieb vergrößert wird. Die Optimierung der Kennzahlen ENG, ELG trägt somit maßgeblich zur Erhöhung der Betriebssicherheit der Produktionsanlage 1 bei. Der Energie-Index EI der Produktionsanlage 1 sowie jeder einzelnen Produktionsmaschine 2, 3, 4, 5, 6, 7 kann auf einer sechsstufigen Skala eingeordnet werden, wobei der niedrigste Energie-Index EI die niedrigste Energieeffizienz kennzeichnet und der höchste Energie-Index EI die höchste Energieeffizienz kennzeichnet. Die sechsstufige Skala ist hierbei nicht als starr anzusehen. Vielmehr ist es denkbar, im Fall zukünftiger Optimierungen der Produktionsanlage 1 zusätzliche, höhere Klassen der Energieeffizienz, welche sich in Energie-Index EI ausdrückt, hinzuzufügen.

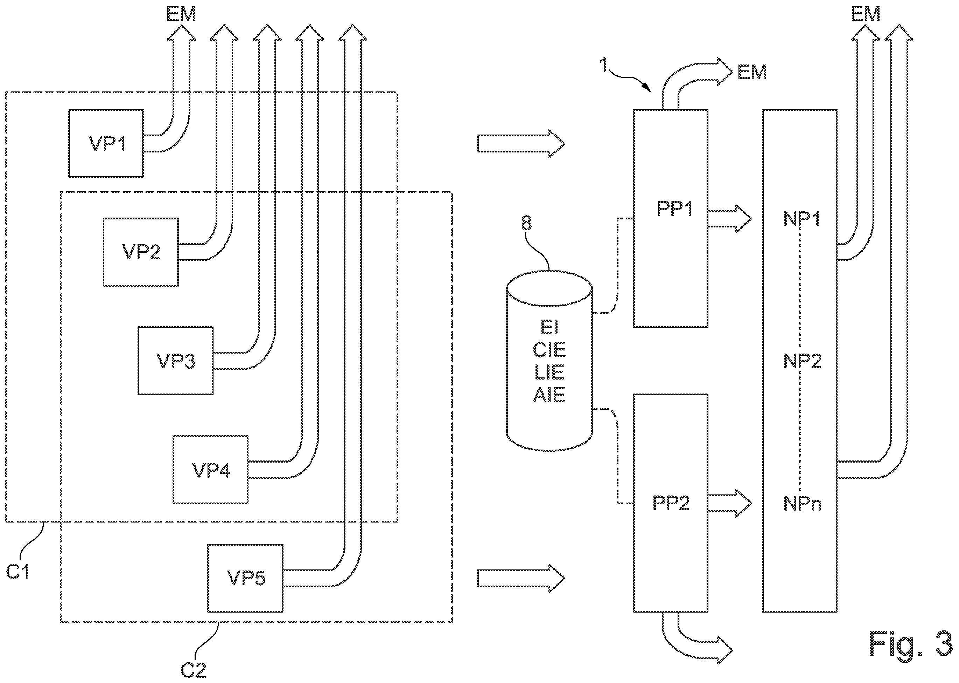

Die Einbeziehung vorgelagerter und nachgelagerter Prozesse in die Ermittlung der Indizes EI, AIE, CIE und LIE ist in Figur 3 veranschaulicht. Weiterhin bezieht sich die Figur 3 auf einen Vergleich eines älteren Produktionsprozesses PP1 mit einem neueren Produktionsprozess PP2, wobei davon ausgegangen wird, dass beide Produktionsprozesse PP1, PP2, welche in der Industrieanlage 1 durchführbar sind, gleiche Endprodukte liefern.

Unterschiede zwischen den Produktionsprozessen PP1, PP2 sind bereits im Bereich der allgemein mit VP1 bis VP5 bezeichneten vorgelagerten Prozesse gegeben. Die für den ersten Produktionsprozess PP1 erforderlichen vorgelagerten Prozesse VP1, VP2, VP3, VP4 werden zusammenfassend als Cluster C1 bezeichnet. Im Fall der Prozesse VP2, VP3, VP4, VP5, welche dem zweiten Produktionsprozess PP2 vorgelagert sind, ist ein Cluster C2 gebildet. Die Cluster C1, C2 überschneiden sich somit, sind jedoch nicht identisch. Jeder der vorgelagerten Prozesse VP1, ... VP5 ist mit spezifischen Emissionen EM einschließlich Emissionen klimarelevanter Gase verbunden. Beispielhaft sind Emissionen durch vorgelagerte Transporte und eingekaufte Güter sowie Emissionen aus der Erzeugung von bezogenem Strom und/oder bezogener Fernwärme und -kälte zu nennen.

All diese auf die vorgelagerten Prozesse VP1, ... VP5 zurückzuführenden Emissionen EM gehen ebenso in die Berechnung der Indizes EI, AIE, CIE und LIE ein, wie die direkt bei den Produktionsprozessen PP1, PP2 auftretenden Emissionen EM. Die letztgenannten Emissionen EM umfassen Emissionen stationärer Anlagen der Industrieanlage 1 sowie gegebenenfalls auch Emissionen mobiler Anlagen.

Im in Figur 3 skizzierten Fall spielen weiterhin nachgelagerte Prozesse NP1, NP2, ... NPn hinsichtlich der Emissionen EM eine Rolle, wobei hier davon ausgegangen wird, dass die verschiedenen Produktionsprozesse PP1, PP2 keine verschiedenen Prozesse NP1, NP2, ... NPn nach sich ziehen. Als Beispiele für Emissonen, die in nachgelagerten Prozessen NP1, ... NPn auftreten, sind Emissionen durch den Gebrauch verkaufter, in der Industrieanlage 1 hergestellter Produkte sowie Emissionen durch nachgelagerte Transporte zu nennen. Sowohl für den ersten Produktionsprozess PP1, als auch für den zweiten, neueren Produktionsprozess PP2 werden Daten zu sämtlichen prozessspezifischen Emissionen EM in der Datenverarbeitungsanlage 8 zusammengeführt, so dass jederzeit Vergleiche, insbesondere hinsichtlich des ökologischen Fußabdrucks, zwischen den verschiedenen Produktionsprozessen PP1, PP2 vorgenommen werden können.

### Bezugszeichenliste

- 1: Industrieanlage
- 2: Produktionsmaschine zur Bearbeitung eines Vorproduktes
- 3: Produktionsmaschine zur Bearbeitung eines Vorproduktes
- 4: Produktionsmaschine zur Bearbeitung eines Vorproduktes
- 5: Produktionsmaschine zur Bearbeitung eines Zwischenproduktes
- 6: Produktionsmaschine zur Bearbeitung eines Zwischenproduktes
- 7: Produktionsmaschine zur Herstellung eines Endproduktes
- 8: Datenverarbeitungsanlage

- AIE: analysierter Energie-Index
- C1, C2: Cluster vorgelagerter Prozesse
- CIE: klassifizierter Energie-Index
- EI: Energie-Index
- EM: Emission
- ENG: Energienutzungsgrad, erste Kennzahl
- ELG: Energieleistungsgrad, zweite Kennzahl
- EQR: Energiequalitätsrate, dritte Kennzahl
- LIE: Live Energie-Index
- MF: Materialfluss
- NP1 ... NPn: nachgelagerte Prozesse
- PP1, PP2: Produktionsprozesse
- S1...S6: Verfahrensschritte
- VP1 ... VP5: vorgelagerte Prozesse

## Patentansprüche

1. Verfahren zum Anlagenbetrieb und -monitoring, integriert in ein Energiemanagementsystem, wobei einer Produktionsmaschine (2, 3, 4, 5, 6, 7) zwei vor Aufnahme ihres bestimmungsgemäßen Betriebs gewonnene Kennzahlen (ENG, ELG), nämlich ein Energienutzungsgrad (ENG), der als erste Kennzahl eine Abhängigkeit vom Verhältnis zwischen der im Produktionsbetrieb und der im Ruhebetrieb aufgenommenen Leistung aufweist, sowie ein Energieleistungsgrad (ELG), der als zweite Kennzahl sowohl vom Wirkungsgrad im Produktionsbetrieb als auch von der Gleichmäßigkeit des Energieverbrauchs im Produktionsbetrieb abhängig ist, zugeordnet sind und im bestimmungsgemäßen Betrieb eine dritte Kennzahl, nämlich eine Energiequalitätsrate (EQR), in die ein Vergleich zwischen dem Energieverbrauch bei der Produktion eines mit derselben Produktionsmaschine (2, 3, 4, 5, 6, 7) hergestellten Referenzteiles und dem aktuellen Energieverbrauch eingeht, wiederkehrend ermittelt wird, wobei zumindest eine der genannten Kennzahlen (ENG, ELG, EQR) auch einen zumindest indirekten Bezug zur Emission klimarelevanter Gase hat und aus allen drei Kennzahlen (ENG, ELG, EQR) ein Energie-Index (EI, AIE, CIE, LIE) generiert wird, welcher wiederholt mit einem Grenzwert verglichen wird, wobei bei Überschreitung des Grenzwertes ein den Betrieb der Produktionsmaschine (2, 3, 4, 5, 6, 7) betreffendes Signal, welches automatisch aus einer Gruppe an Signalen ausgewählt wird, die mindestens ein Warnsignal sowie ein Abschaltsignal umfasst, ausgelöst wird.

2. Verfahren nach Anspruch 1, **dadurch gekennzeichnet, dass** es sich bei dem genannten Energiemanagementsystem um ein Energiemanagementsystem nach DIN EN ISO 50001, Fassung Dezember 2018 handelt

3. Verfahren nach Anspruch 1 oder 2, **dadurch gekennzeichnet, dass** in die Ermittlung des Energieleistungsgrades (ELG) ein Vergleich mit mindestens einer anderen, mit der betrachteten Produktionsmaschine (2, 3, 4, 5, 6, 7) prinzipiell vergleichbaren Maschine, das heißt Referenzmaschine, eingeht.

4. Verfahren nach einem der Ansprüche 1 bis 3, **dadurch gekennzeichnet, dass** im Zuge der Generierung des Energie-Index (EI, AIE, CIE, LIE) mindestens ein abgeleiteter Energie-Index (AIE, CIE, LIE) ermittelt wird, welcher aus einer Gruppe an Indizes ausgewählt ist, die einen über eine Zeiteinheit gemittelten analysierten Energie-Index (AIE), einen eine dauerhafte Klassifizierung angebenden klassifizierten Energie-Index (CIE), sowie einen als Echtzeit-Einstufung vorgesehenen Live Energie-Index (LIE) umfasst, wobei in die Ermittlung des Energie-Index (EI, AIE, CIE, LIE) auch einem Produktionsprozess (PP1, PP2) vor- und nachgelagerte Prozesse (VP1, ... VP5, NP1, ... NPn) eingehen.

5. Verfahren nach einem der Ansprüche 1 bis 4, **dadurch gekennzeichnet, dass** vorgenommene Vergleiche zwischen dem Energie-Index (EI, AIE, CIE, LIE) und dem Grenzwert in ein Analyseprogramm zur Optimierung des produktiven und/oder nicht produktiven Betriebs der Produktionsmaschine (2, 3, 4, 5, 6, 7) eingehen.

6. Industrieanlage (1), umfassend eine Mehrzahl an Produktionsmaschinen (2, 3, 4, 5, 6, 7), welche in Zusammenwirkung mit einer Datenverarbeitungsanlage (8) zur Durchführung des Verfahrens nach Anspruch 1 eingerichtet sind.

7. Industrieanlage (1) nach Anspruch 6, **dadurch gekennzeichnet, dass** diese mindestens vier miteinander verkettete Produktionsmaschinen (2, 3, 4, 5, 6, 7) umfasst, wobei die Datenverarbeitungsanlage (8) zur Generierung mindestens eines gesamten Energie-Index (EI, AIE, CIE, LIE) der Industrieanlage (1) eingerichtet ist.

## Claims

1. A method for plant operation and monitoring, integrated into an energy management system, wherein a production machine (2, 3, 4, 5, 6, 7) is assigned two key figures (ENG, ELG) obtained before commencing its intended operation, namely a degree of energy utilisation (ENG), which as a first key figure has a dependency on the ratio between the power consumed in production operation and the power consumed in idle operation, and a degree of energy performance (ELG), which as a second key figure depends on both the efficiency in production operation and the uniformity of the energy consumption in production operation, and, during intended operation, a third key figure, namely an energy quality rate (EQR), which includes a comparison between the energy consumption during the production of a reference part manufactured by the same production machine (2, 3, 4, 5, 6, 7) and the current energy consumption, is repeatedly determined, at least one of the said key figures (ENG, ELG, EQR) also has an at least indirect relationship to the emission of climate-relevant gases, and an energy index (EI, AIE, CIE, LIE) is generated from all three key figures (ENG, ELG, EQR) and is repeatedly compared with a limit value, and if the limit value is exceeded, a signal relating to the operation of the production machine (2, 3, 4, 5, 6, 7) is triggered, which signal is automatically selected from a group of signals comprising at least a warning signal and a shutdown signal.

2. The method according to claim 1, **characterised in that** the mentioned energy management system is an energy management system according to DIN EN ISO 50001, version December 2018.

3. The method according to claim 1 or 2, **characterised in that** the determination of the energy performance level (ELG) includes a comparison with at least one other machine, i.e. a reference machine, that is fundamentally comparable to the production machine under consideration (2, 3, 4, 5, 6, 7).

4. The method according to any one of claims 1 to 3, **characterised in that,** in the course of generating the energy index (EI, AIE, CIE, LIE), at least one derived energy index (AIE, CIE, LIE) is determined which is selected from a group of indices comprising an analysed energy index (AIE) averaged over a unit of time, a classified energy index (CIE) indicating a permanent classification and a live energy index (LIE) intended as a real-time rating, the determination of the energy index (EI, AIE, CIE, LIE) also including upstream and downstream processes (VP1, ... VP5, NP1, ... NPn) of a production process (PP1, PP2).

5. The method according to any one of claims 1 to 4, **characterised in that** comparisons made between the energy index (EI, AIE, CIE, LIE) and the limit value are included in an analysis program for optimising the productive and/or non-productive operation of the production machine (2, 3, 4, 5, 6, 7).

6. An industrial plant (1) comprising a plurality of production machines (2, 3, 4, 5, 6, 7) which, in cooperation with a data processing system (8), are configured to carry out the method according to claim 1.

7. The industrial plant (1) according to claim 6, **characterised in that** same comprises at least four interlinked production machines (2, 3, 4, 5, 6, 7), the data processing system (8) being configured to generate at least one total energy index (EI, AIE, CIE, LIE) of the industrial plant (1).

## Revendications

1. Procédé d'exploitation et de surveillance d'installation, intégré dans un système de gestion d'énergie, dans lequel une machine de production (2, 3, 4, 5, 6, 7) se voit attribuer deux caractéristiques (ENG, ELG) obtenues avant le début de son exploitation prévue, à savoir un degré d'utilisation énergétique (ENG), qui, en tant que première caractéristique, dépend du rapport entre la puissance consommée en exploitation de production et celle en exploitation à vide, et un degré de performance énergétique (ELG), qui, en tant que deuxième caractéristique, dépend à la fois du degré d'efficacité en exploitation de production et de l'uniformité de la consommation d'énergie en exploitation de production, et pendant l'exploitation prévue, une troisième caractéristique, à savoir un taux de qualité énergétique (EQR), qui comprend une comparaison entre la consommation d'énergie dans la production d'une pièce de référence fabriquée avec la même machine de production (2, 3, 4, 5, 6, 7) et la consommation d'énergie actuelle, est déterminé de manière répétée, dans lequel au moins une desdites caractéristiques (ENG, ELG, EQR) a également une relation au moins indirecte avec l'émission de gaz à effet de serre et un indice énergétique (EI, AIE, CIE, LIE) est généré à partir des trois caractéristiques (ENG, ELG, EQR), lequel indice est comparé à plusieurs reprises à une valeur limite, un signal relatif à l'exploitation de la machine de production (2, 3, 4, 5, 6, 7) étant déclenché en cas de dépassement de la valeur limite, lequel signal est automatiquement sélectionné parmi un groupe de signaux qui comprend au moins un signal d'avertissement et un signal d'arrêt.

2. Procédé selon la revendication 1, **caractérisé en ce que** ledit système de gestion d'énergie est un système de gestion d'énergie selon la norme DIN EN ISO 50001, version décembre 2018.

3. Procédé selon la revendication 1 ou 2, **caractérisé en ce que** la détermination du degré de performance énergétique (ELG) comprend une comparaison avec au moins une autre machine fondamentalement comparable à la machine de production (2, 3, 4, 5, 6, 7) considérée, c'est-à-dire une machine de référence.

4. Procédé selon l'une des revendications 1 à 3, **caractérisé en ce que** lors de la génération de l'indice énergétique (EI, AIE, CIE, LIE), au moins un indice énergétique (AIE, CIE, LIE) dérivé est déterminé, lequel est sélectionné dans un groupe d'indices qui comprend un indice énergétique analysé (AIE) moyenné sur une unité de temps, un indice énergétique classifié (CIE) indiquant une classification permanente, et un indice énergétique en temps réel (LIE) destiné à une catégorisation en temps réel, la détermination de l'indice énergétique (EI, AIE, CIE, LIE) comprenant également les processus en amont et en aval (VP1, ... VP5, NP1, ... NPn) d'un processus de production (PP1, PP2).

5. Procédé selon l'une des revendications 1 à 4, **caractérisé en ce que** les comparaisons effectuées entre l'indice énergétique (EI, AIE, CIE, LIE) et la valeur limite sont intégrées dans un programme d'analyse pour optimiser l'exploitation productive et/ou non productive de la machine de production (2, 3, 4, 5, 6, 7).

6. Installation industrielle (1), comprenant une pluralité de machines de production (2, 3, 4, 5, 6, 7) qui sont conçues en coopération avec une installation de traitement de données (8) pour mettre en œuvre le procédé selon la revendication 1.

7. Installation industrielle (1) selon la revendication 6, **caractérisée en ce que** celle-ci comprend au moins quatre machines de production (2, 3, 4, 5, 6, 7) interconnectées, dans laquelle l'installation de traitement de données (8) est conçue pour générer au moins un indice énergétique total (EI, AIE, CIE, LIE) de l'installation industrielle (1).
